(19) Europäisches Patentamt
European Patent Office
Office européen des brevets

(11) EP 2 472 468 A1

(12) EUROPEAN PATENT APPLICATION
published in accordance with Art. 153(4) EPC

(43) Date of publication:
04.07.2012   Bulletin 2012/27

(51) Int Cl.:
G06T 1/20 (2006.01)

(21) Application number: 10811704.5

(22) Date of filing: 13.08.2010

(86) International application number:
PCT/JP2010/063740

(87) International publication number:
WO 2011/024654 (03.03.2011 Gazette 2011/09)

(84) Designated Contracting States:
AL AT BE BG CH CY CZ DE DK EE ES FI FR GB GR HR HU IE IS IT LI LT LU LV MC MK MT NL NO PL PT RO SE SI SK SM TR

(30) Priority:  26.08.2009   JP 2009195777

(71) Applicant: The University of Tokyo
Bunkyo-Ku
Tokyo 113-8654 (JP)

(72) Inventors:
• ISHIKAWA, Masatoshi
Tokyo 113-8654 (JP)
• KOMURO, Takashi
Saitama 338-8570 (JP)
• TABATA, Tomohira
Tokyo 113-8654 (JP)

(74) Representative: Piotrowicz, Pawel Jan Andrzej et al
Venner Shipley LLP
Byron House
Cambridge Business Park
Cowley Road
Cambridge CB4 0WZ (GB)

(54) IMAGE PROCESSING DEVICE AND IMAGE PROCESSING METHOD

(57)    Disclosed are an image processing device and an image processing method which achieve an increase in the speed of image processing by designating and operating a plurality of image processing units each corresponding to a specific function for the image processing in accordance with a program. A frame memory (21...) stores image data to be processed. Parallel memories (121...) each receive all or part of the image data stored in the frame memory (21...) and transmit the received image data to any of DMACs (111...) or processing units (13A...) for the image processing. The processing units (13A...) each have a function corresponding to a function for the image processing. The processing units (13A...) each receive all or part of the image data from the parallel memory (121...) or the frame memory (21...) in accordance with a command from a CPU (3) and perform processing based on the function for the image processing on all or part of the image data.

FIG. 1

EP 2 472 468 A1

**Description**

TECHNICAL FIELD

The present invention relates to a device and method suitable for high speed processing of images.

BACKGROUND ART

Often, with conventional machine vision and robot vision, a frame rate has been used that has an upper limit of a video frame rate (24 - 60 fps) determined based on human visual characteristics. In contrast, research has been conducted into real time vision (hereafter referred to as high-speed vision) using a high frame rate camera in the order of 1000 fps, far in excess of the video frame rate.

For example, by using high-speed vision, stabilized visual feedback control becomes possible, and so high-speed vision is applied to control of robots requiring high-speed operation (non-patent references 1-5 below).

Also, since high-speed vision can measure fast movement, it is also applied to somatoscopy (non-patent publications 6 and 7 below), motion capture (non-patent publication 8 below) and fluid measurement (non-patent publication 9 below).

Besides this, there is also research using high-speed vision in improving the performance of general image processing, such as tracking (non-patent publications 10 and 11 below), three-dimensional measurement (non-patent publications 12 and 13 below), image composition (non-patent publications 14 and 15 below), optical flow estimation (non-patent publication 16 below) etc.

In handling this type of high frame rate moving image in real-time, high calculation performance is required. In recent years, due to the dramatic improvement in computers, even with systems that use PCs, while it is possible to attain a certain level of performance, there is a problem in that PCs lack stability and reliability. Accordingly, in order to realize practicable high-speed vision, it is been considered desirable to use a combined system. Using a combined system, makes is possible to optimize a hardware structure to the objective of use, and also leads to miniaturization of the system.

On the other hand, a CPU used in a normal combination system is powerless compared to a CPU for a PC, and so there is a need for acceleration of image processing using a co-processor. High-speed vision systems hitherto developed have attempted to make calculations high speed by adopting SIMD type massively parallel processors (non-patent publication 10 below), and implementing dedicated circuits in an FPGA (field programmable gate array) which is an LSI whose hardware structure can be rewritten (non-patent publications 17 and 18 below).

An SIMD type massively parallel processor can be implemented with extremely high performance in the case of carrying out processing uniformly on a lot of pixels (non-patent publications 19 - 22 below). However, in the case of carrying out processing for part of an image, it is not always possible to make practical effective use of all processing elements (PE). With a lot of applications that use high-speed vision, there is a need to carry out processing for localized regions, such as for tracking, at a higher speed than processing for an entire image, and since calculation of small regions is central, this problem is serious.

1 Also, in a lot of cases, data transfer between PEs is only possible between adjacent PEs, and efficient implementation of geometric transforms, such as scaling or rotation, is difficult. Accordingly, there are limitations on the algorithms that can be implemented.

Besides this, a focal plane processor that carries out calculation processing on an image plane of an image sensor can also be said to be improving high frame rate processing, but due to constraints in circuit area is often designed specialized to specific processing. There has also been development of technology to perform general-purpose calculation (non-patent publications 23 - 26 below), but these suffer from the same problems as for the SIMD type massively parallel processor described above.

It is also conceivable to use DSP in image processing. In recent years, DSP adopting parallel processing such as VLIW (Very Long Instruction Word) or multicore technology has become prominent and enables high-speed processing (non-patent publications 27 and 28 below). However, in an architecture using VLIW, since parallelization of algorithms is mainly performed automatically by a compiler, the time required to execute instructions can not be predicted in advance, or execution speed is lowered for the reason that is not anticipated.

In contrast, since it is possible for ASICs and FPGAs to directly implement parallelism possessed by algorithms in hardware, efficiency in parallelization is high, and it is easy to optimize processing. In particular, FPGAs, which are LSIs capable of having their hardware structure rewritten, are suited to prototypes and low volume production. On the other hand, with a system using FPGAs, circuit design using a HDL (hardware description language) is required every time an attempt is made to change an algorithm, and there is a problem that development costs are high.

In contrast, a system that can customize an instruction set of a general purpose CPU using reconfigurability of an FPGA has also been proposed (non-patent publication 29 below). With this system, the simplicity of software development possessed by a CPU and the reconfigurability of an FPGA are combined, and it is possible to minimize the users circuit design burden. However, this system can only use CPUs that have been prepared in advance, and it is not possible to make maximum practical use of business development tools, or middleware and software resources etc.

According to the findings of the present inventors, if performance degradation due to interrupts and multitasking etc. is considered, then is a desired to isolate CPUs and FPGAs as much as possible, and for FPGAs to function autonomously. There is also a desire to prepare structures for parallel processing and parallel data access required for image processing, and high-speed data transfer, in advance.

Citation List

Non-patent literature

Non-patent literature 1:
A. Namiki, Y. Nakabo, I. Ishii, and M. Ishikawa, "1 ms sensory-motor fusion system, "IEEE Transactions on Mechatoronics, Vol. 5, No. 3, pp. 244-252,2000.
Non-patent literature 2:
Y. Nakamura, K. Kishi, and H. Kawakami," Heart beat synchronization for robotic cardiac surgery, "Proc. IEEE International Conference on Robotics and Automation, pp. 2014-2019, 2001.
Non-patent literature 3:
R. Ginhoux, J. Gangloff, M. de Mathelin, L. Soler, M. Sanchez, and J. Marescaux, "Beating heart tracking in robotic surgery using 500 Hz visual servoing, model predictive control and an adaptive observer, "Proc. IEEE International Conference on Robotic sand Automation, pp. 274-279, 2004.
Non-patent literature 4:
T. Senoo, A. Namiki, and M. Ishikawa, "High-speed batting using a multi-jointed manipulator, "Proc. IEEE International Conference on Robotics and Automation, pp.1 191-1196, 2004.
Non-patent literature 5:
N. Furukawa, A. Namiki, T. Senoo, and M. Ishikawa, "Dynamic regrasping using a high-speed multi-fingered hand and a high-speed vision system, "Proc. IEEE International Conference on Robotics and Automation, pp. 181-187,2006.
Non-patent literature 6:
H. Oku, N. Ogawa, K. Hashimoto, and M. Ishikawa, "Two-dimensional tracking of a motile microorganism allowing high-resolution observation with various imaging techniques, "Review of Scientific Instruments, Vol. 76, No. 3, 034301, 2005.
Non-patent literature 7:
I. Ishii, Y. Nie, K. Yamamoto, K. Orito, and H. Matsuda, "Real-time and long-time quantification of behavior of laboratory mice scratching, "Proc. IEEE International Conference on Automation Science and Engineering, pp. 628-633, 2007.
Non-patent literature 8:
K. Yamane, T. Kuroda, and Y. Nakamura, "High-precision and high-speed motion capture combining heterogeneous cameras, "Proc. IEEE/RSJ International Conference on Intelligent Robots and Systems, pp. 279-286, 2004.
Non-patent literature 9:
Y. Watanabe, T. Komuro, and M. Ishikawa, "A high-speed vision system for moment-based analysis of numerous objects, "Proc. IEEE International Conference on Image Processing, pp. V177-180, 2007.
Non-patent literature 10:
Y. Nakabo, M. Ishikawa, H. Toyoda, and S. Mizuno, "1 ms column parallel vision system and its application of high speed target tracking, "Proc. IEEE International Conference on Robotics and Automation, pp. 650-655, 2000.
Non-patent literature 11:
U. Muehlmann, M. Ribo, P. Lang, and A. Pinz, "A new high speed CMOS camera for real-time tracking applications, "Proc. IEEE International Conference on Robotics and Automation, pp. 5195-5200, 2004.
non-patent literature 12: Y. Watanabe, T. Komuro, and M. Ishikawa, "955-fps real-time shape measurement of a moving/deforming object using high-speed vision for numerous-point analysis, "Proc. IEEE International Conference on Robotics and Automation, pp. 3192-3197, 2007.
Non-patent literature 13
I. Ishii ,K. Yamamoto, K. Doi, and T. Tsuji, "High-speed 3D image acquisition using coded structured light projection, "Proc. IEEE/RSJ International Conference on Intelligent Robots and Systems, pp. 925-930, 2007.
non-patent literature 14: X. Liu and A. Gamal, "Synthesis of high dynamic range motion blur free image from multiple captures, "IEEE Transactions on Circuits and Systems I: Fundamental Theory and Applications, vol. 50, No. 4, pp. 530-539, 2003.

Non-patent literature 15: T. Komuro, Y. Watanabe, M. Ishikawa, and T. Narabu, "High-S/N imaging of a moving object using a high-frame-rate camera, "IEEE International Conference on Image Processing, pp. 517-520, 2008.

Non-patent literature 16: S. Lim, J. Apostolopoulos, and A. Gamal, "Optical flow estimation using temporally over sampled video, "IEEE Transactions on ImageProcessing,vol.14,No.8,pp.1074-1087,2005.

Non-patent literature 17: I. Ishii, K. Kato, S. Kurozumi, H. Nagai, A. Numata, and K. Tajima, "Development of a mega-pixel and milli-second vision system using intelligent pixel selection, "Proc. IEEE Technical Exhibition Based Conference on Robotics and Automation, pp. 9-10, 2004.

Non-patent literature 18: K. Shimizu and S.Hirai, "CMOS + FPGA vision system for visual feed back of mechanical systems, "Proc. IEEE International Conference on Robotics and Automation, pp. 2060-2065, 2006.

Non-patent literature 19: W. Raab, N. Bruels, U. Hachmann, J. Harnisch, U. Ramacher, C. Sauer, and A. Techmer, "A 100-GOPS programmable processor for vehicle vision systems, "IEEE Design & Test of Computers, vol. 20, No. 1, pp. 8-15, 2003.

Non-patent literature 20: H. Noda, M. Nakajima, K. Dosaka, K. Nakata, M. Higashida, O. Yamamoto, K. Mizumoto, T. Tanizaki, T. Gyohten, Y. Okuno, H. Kondo ,Y. Shimazu, K. Arimoto, K. Saito, and T. Shimizu, "The design and implementation of the massively parallel processor based on the matrix architecture, "Proc. IEEE Journal of Solid-State Circuits, vol. 42, No. 1, pp. 183-192, 2007.

Non-patent literature 21: A. Abbo, R. Kleihorst, V. Choudhary, L. Sevat, P. Wielage, S. Mouy, B. Vermeulen, and M. Heijligers, "Xetal-II: A 107 GOPS, 600 mW massively parallel processor for video scene analysis, "IEEE Journal of Solid-State Circuits, vol. 43, No. 1, pp. 192-201, 2008.

Non-patent literature 22: S. Kyo, S. Okazaki, and T. Arai, "An integrated memory array processor architecture for embedded image recognition systems, "Proc. International Symposium on Computer Architecture, pp. 134-145, 2005.

Non-patent literature 23: J. Eklund, C. Svensson, and A. A˚stro"m, "VLSI implementation of a focal plane image processor-a realization of the near-sensor image processing concept, "IEEE Transactions on Very Large Scale Integrat. (VLSI) Systems, vol. 4, no. 3, pp. 322-335, 1996.

Non-patent literature 24: T. Komuro, S. Kagami, and M. Ishikawa, "A dynamically reconfigurable SIMD processor for a vision chip, "IEEE Journal of Solid-State Circuits, Vol. 39, No. 1, pp. 265-268, 2004.

Non-patent literature 25: P. Dudek and P. Hicks, "A general-purpose processor-per-pixel analog SIMD vision chip, "IEEE Transactions on Circuits and Systems I: Regular Papers, vol. 52, No.1, pp. 13-20, 2005.

Non-patent literature 26: W. Miao, Q. Lin, W. Zhang, and N. Wu, "A programmable SIMD vision chip for real-time vision applications, "IEEE Journal of Solid-State Circuits, vol. 43, pp. 1470-1479, 2008.

Non-patent literature 27: J. Tanabe, Y. Taniguchi, T. Miyamori, Y. Miyamoto, H. Takeda, M. Tarui, H. Nakayama, N. Takeda, K. Maeda, and M. Matsui, "Visconti: multi VLIW image recognition processor based on configurable processor, "Proc. IEEE Custom Integrated Circuits Conference, pp. 185-188, 2003.

Non-patent literature 28: B. Khailany, T. Williams, J. Lin, E. Long, M. Rygh, D. Tovey, and W. Dally, "A programmable 512 GOPS stream processor for signal, image, and video processing, "IEEE Journal of Solid-State Circuits, vol. 43, pp. 202-213, 2008.

Non-patent literature 29: M. Wirthlin, B. Hutchings, and K. Gilson, "The nanoprocessor: a low resource reconfigurable processor, "Proc. IEEE Workshop on FPGAs for Custom Computing Machines, pp. 23-30, 1994.

Non-patent literature 30: J. Farrugia, P. Horain, E. Guehenneux, and Y. Alusse, "GPUCV: a framework for image processing acceleration with graphics processors,"Proc. IEEE International Conference on Multimedia and Expo, pp. 585-588, 2006.

Summary of the Invention

Technical Problem

The present invention has been conceived in view of the above-described situation. The main object of the present invention is to make image processing high-speed by causing designation and operation of a plurality of image processing sections corresponding to a specific function for image processing in accordance with a program.

Solution to the Problems

Means for solving the above-described problems can be described as in the following aspects.

(Aspect 1)

An image processing device, comprising:

a coprocessor, frame memory and a CPU,
the frame memory being configured to store image data that is to be processed,
the coprocessor being provided with a plurality of image processing sections and a plurality of parallel memories,
the parallel memories being configured to receive all or part of the image data that has been stored in a frame memory and transmitting to any of the image processing sections,
the plurality of image processing sections each having a function corresponding to a function for image processing, and
the plurality of image processing sections being configured to, in accordance with instruction from a CPU, receive all or part of the image data from the parallel memories or the frame memory, and perform processing on all or part of the image data in accordance with a function for the image processing.

The image processing sections correspond to specific functions used in image processing. In the case of carrying out image processing, processing can be made high speed by carrying out execution of functions required for processing in dedicated image processing sections. Further, in a program, it is possible to execute processing by designating a specific function or image processing section.

(Aspect 2)

The image processing device of aspect 1, wherein the coprocessor is configured using reconfigurable programmable logic device.
The reconfigurable programmable logic devices are integrated circuits normally referred to as FPGAs or FPLAs. By using this type of device as a coprocessor it is possible to rewrite functions of the image processing sections according to the user's needs. For example, it is possible to add image processing sections corresponding to deficient functions, or to add image processing sections corresponding to required functions.

(Aspect 3)

The image processing device of aspect 1 or 2, wherein the plurality of parallel memories are dual port memories.
By using dual port memories it is possible to carry out read and write to the memories independently. It is therefore possible to make processing even higher speed.
Also, by using dual port memory it is possible to carry out pipeline processing with parallel memory as a buffer, in accordance with the CPU commands.

(Aspect 4)

The image processing device of any one of aspects 1 - 3, wherein the image processing sections comprise a direct memory access controller and a processing unit, the direct memory access controller being configured to control operation of the parallel memory, and the processing unit being configured to carry out processing in accordance with a function for the image processing.

(Aspect 5)

The image processing device of any one of aspects 1 - 4, wherein a plurality of the coprocessors are provided.

(Aspect 6)

The image processing device of aspect 5, wherein the plurality of coprocessors are connected to a shared coprocessor bus.

(Aspect 7)

The image processing device of any one of aspects 1 - 6, wherein the coprocessor is further provided with a descriptor, the CPU being configured to write commands for a coprocessor to the descriptor, and the coprocessors being configured to read commands that have been written to the descriptor, and execute processing using the plurality of image processing sections.

By using the descriptor, the CPU can designate a plurality of processes for the coprocessor at one time. As a result, there is the advantage that it is possible to reduce the number of times interrupts are issued to the CPU at the time of operation completion by the co-processor.

(Aspect 8)

The image processing device of any one of aspects 1 - 7, wherein the plurality of image processing sections are configured to operate independently and in parallel in accordance with commands from the CPU.
By enabling parallel operation of the plurality of image processing sections, parallel processing becomes possible at a task level, in accordance with commands from the CPU. Also, by writing process sequences at a processing unit and waiting unit into the descriptor, it is possible to efficiently carry out parallel processing at a task level.

(Aspect 9)

An image processing method provided with the following steps:

(1) a step of a frame memory storing image data that is to be processed;
(2) a step of a parallel memory receiving all or part of the image data that has been stored in the frame memory:
(3) a step of the plurality of image processing sections receiving all or part of the image data from the parallel memories or the frame memory, in accordance with instruction from a CPU; and
(4) a step of, in accordance with instruction from the CPU, respectively performing processing on all or part of the image data in accordance with a function for image processing.

(Aspect 10)

The image processing method of aspect 9, wherein dual port memory is used as the parallel memory, and further, the plurality of image processing sections perform pipeline processing with the parallel memory as a buffer, in accordance with instruction from the CPU.
By carrying out pipeline processing with parallel memory as a buffer, it becomes possible to make image processing even higher speed.

(Aspect 11)

The image processing method of aspects 9 or 10, wherein the plurality of image processing sections are configured to operate independently and in parallel in accordance with commands from the CPU, and the plurality of image processing sections also carry out parallel processing at a task level in accordance with instruction from the CPU.
By carrying out parallel processing at a task level, it can be expected to make image processing high-speed.

Effect of the invention

According to the present invention, it is possible to execute high-speed image processing, and furthermore it becomes possible to provide an image processing device and image processing method where the burden on program creation is not excessive.

Brief Description Of The Drawings

Fig. 1 is a schematic block diagram of an image processing device of one embodiment of the present invention.
Fig. 2 is a flowchart showing an overview of an image processing device using the device of Fig. 1.
Fig. 3 is a schematic hardware structure diagram of the device of Fig. 1.

Embodiments for carrying out the Invention

An image processing device of one embodiment of the present invention will be described with reference to the attached drawings. This image processing device comprises, as main elements, coprocessors 11, 12, ... 1P of P in number, frame memories 21, 22, ... 2P of P in number, and a CPU 3. This device is further provided with a main memory 4, an I/O interface 5, a camera interface 6, a video interface 7, a CPU bus 8, and an inter-coprocessor bus 9.

Each frame memory 21 ... is configured to store image data that will be processed. Specifically, with this embodiment, each frame memory is configured to store image data acquired from the camera interface 6 or the video interface 7. As illustrated in the drawings, each frame memory 21 ... is provided in correspondence with each coprocessor 11 ... .

The coprocessors 11 ... are each provided with a plurality of direct memory access controllers (DMAC) 111, 112 ... , 11N, a plurality of parallel memories 121, 122, ... , 12M, and a plurality of processing units 13A, 13B, ..., 13X. The specific internal structure of each coprocessor is the same in this embodiment, and so detailed description will only be given for the internal structure of coprocessor 11.

With this embodiment, the plurality of image processing sections of the present invention are constituted by the DMACs 111 ... and the processing units 13A ... . The DMACs and the processing units are not provided in one-to-one correspondence. In this specification, the fact that there are a plurality of processing units means that there are a priority of image processing sections. However, in the case where the DMACs 111 handle an image processing function there are a plurality of DMACs, and it is also possible to understand that there are a plurality of image processing sections.

The DMACs 111 ... are configured to control operation of the parallel memories 121 ... . However, with this embodiment, the DMAC 111 cooperates with the processing units 13A ... so as to execute functions of the image processing.

The processing units 13A ... are configured corresponding to functions for image processing.

The parallel memories 121 ... acquire all or part of image data that has been stored in the frame memory 21, and transmit the data to any of the processing units 13a ... via the DMACs.

Also, dual port memory is used as the parallel memory 121 ... of this embodiment.

The plurality of DMACs 111 ... and processing unit sections 13A ... of this embodiment each have a function corresponding to a function for image processing. However, it is also possible to have a structure where only the processing units 13A ... handle this function.

The DMACs 111 ... and the processing unit sections 13A ... are configured to acquire all or part of image data from the parallel memories 121 ... or the frame memory 21, in accordance with commands from the CPU. Further, the DMACs 111 ... and the processing unit sections 13A ... carry out image processing in accordance with a function for image processing on all or part of the image data.

The coprocessors 11 ... of this embodiment are configured using reconfigurable programmable logic devices, specifically, so-called FPGAs. Accordingly, the number and capacity of parallel memories 121 ... of the coprocessors 11 ... , and the number and functions of the DMACs 111 ... and the processing units 13A ... ,can be changed by rewriting the coprocessors 11 ... .

The I/O interface 5 is a section for controlling input and output operations between external devices (not illustrated).

The camera interface 6 has a function for acquiring images from a camera (not shown).

The video interface 7 has a function for acquiring images from a video (not shown).

The CPU bus 8 is a bus for carrying out data transfer between the CPU and each of the co-processors 11 ... .

The inter-coprocessor bus 9 is a bus for carrying out data transfer between each of the co-processors 11 ... .

Each of the coprocessors 11 ... is further provided with a descriptor 141. A descriptor 141 is a register-array for writing contents of image processing and direct memory access (DMA) in accordance with commands from the CPU 3. Specifically, the CPU 3 of this embodiment writes commands for the coprocessors 11 ... to the descriptor 141.

The coprocessors 11 ... read out commands written in the descriptor 141, and execute processing using the DMACs 111 ... and the processing units 13A ... (specifically, processing using the plurality of image processing sections).

(Image processing method)

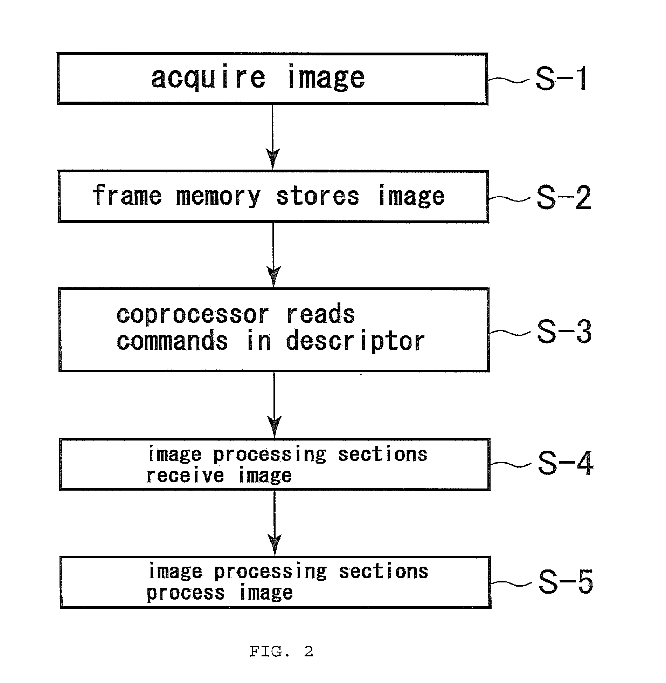

Next, an image processing method that uses the image processing device of this embodiment will be described below with reference to Fig. 2.

(Step S-1 of Fig. 2)

First, image data constituting a subject of processing is acquired from the camera interface 6 or the video interface 7 in accordance with commands from the CPU 3.

(Step S-2 of Fig. 2)

Next, frame memories 21 ... corresponding to coprocessors 11 ... that will process the image store the image or part of the image. This processing is also carried out in accordance with commands from the CPU 3.

On the other hand, the CPU 3 writes commands for each of the coprocessors 11 ... to a respective descriptor 141.

Specifically, the CPU 3 writes the following information (commands) to each descriptor 141.

- Processing unit that will be used;
- Parallel memory that will be used (for input and for output);
- Parameters for processing;
- Upon completion of processing, in which processing unit will processing commence (specifically, waiting unit).

(Step S-3 of Fig. 2)

Next, each of the coprocessors 11 ... reads out commands that have been written into the descriptor 141.

Specifically, each of the coprocessors 11 ... reads out commands written in the descriptor 141, and assigns processing to each image processing section (DMAC and processing unit). Respective DMACs and processing units are operated independently and in parallel. For example, carrying out coordinate change while carrying out summation calculation is also possible.

If a descriptor system is used, it is possible to designate a plurality of processes in a coprocessor at one time, which means it is possible to reduce the number of times interrupts are issued to the CPU at the time of operation completion by the coprocessor.

(Step S-4 and S-5 of Fig. 2)

Next, the image processing sections acquire all or part of an image from the frame memories 21 ... or from the parallel memory 121 ..., and perform processing. This processing will be described in detail in the following.

A module for sorting processes being written to the descriptor (this module can be constructed within the descriptor, for example) operates as follows. In the description here, a processing unit includes a DMAC (in the case of having an image processing function).

1) read next descriptor.
2) if descriptor is empty halt processing.
3) wait until processing unit it is intended to use and all waiting units become usable.
4) distribute processing to processing unit.
5) return to 1) above.

Here, in this embodiment, in the case where a waiting unit is not designated, the content of processing that has been written to a descriptor is immediately sent to the respective processing units. In the event that a waiting unit has been designated, the distribution of processing is not carried out until the designated unit is empty (until processing is complete). In the event that processing using the same unit is queued, the next processing is carried out upon completion of the previous processing

With the architecture of this embodiment, implementation of algorithms can be carried out using only a normal CPU programming environment. Processing units 13A ... or DMACs 111 ... for carrying out basic image processing are prepared in advance within the coprocessors 11 ..., and by using these in combination it is possible to implement various algorithms. With this embodiment, since it is not necessary to carry out circuit design every time it is intended to change an algorithm, the burden on the user is reduced. Also, since with this embodiment it is possible to execute specific functions at high speed using the processing units 13A ... or the DMACs 111 ..., it is possible to carry out image processing at high speed.

With this embodiment, it is possible to write commands to the descriptor by calling an API (application programming interface) prepared within the program.

For example, the case of carrying out processing in a processing unit 13A upon completion of both the processing unit 13A and a processing unit 13B using a coprocessor 11 is as follows. In the following example, affixed characters such as UNIT A1 and UNIT_A2 represent processing modules having the same function.

```
proc_A(CP_1, UNIT_A1, 0, ...);
proc_B(CP_1, UNIT-B, 0, ...);
proc_A(CP_1, UNIT_A2, UNIT_A1 |
UNIT_B, ...);
```

Here, the function proc_X takes the following format. The function name represents the type of processing. cp represents a co-processor used, unit represents a processing unit used, and wunit represents a waiting unit. Besides this, memory and address to be used, image size and calculation parameters etc. are also designated by an argument(s).

```
proe_X(int cp, int units, int wunits,
...);
```

If sync() is called, firmware enters a wait state until a designated processing unit is empty. The coprocessor cp and the waiting unit wunit to be used are contained in the argument for sync().

```
proc_A(CP_1, UNIT_A1, ...);
proc_B(CP_1, UNIT_B, ...);
sync(CP_1, UNIT_A1 | UNIT_B);
```

In a case where having only previously prepared functions is insufficient, as was described above, it is possible to prepare necessary functions by rewriting logic circuits within the FPGAs constituting the coprocessors 11 ... . At this time, circuit design becomes necessary, but this is not for all coprocessors, and since it is possible to change on a unit by unit basis, the circuit design burden can be made as low as possible.

Further, since the basic structure of the processor is not changed even if the FPGA is rewritten, it is possible to maintain software compatibility as much as possible. For example, by calling units of the same function by the same function name and/or unit name, it is possible to keep changes to the existing code as small as possible.

The processing units 13A ... are implemented as dedicated circuits for every process, and parallelization is achieved by concurrent execution of operations and pipelining. In addition, it is possible to allow processing for one pixel or more to be executed in one clock by simultaneously reading out a plurality of items of data from the parallel memories 121 .... This can be regarded as parallel processing within tasks.

Specifically, in this embodiment, it is possible to carry out parallel processing at the task level in accordance with instructions from the CPU (namely a program), using a plurality of image processing sections that operate in parallel.

On the other hand, in parallelizing processing at the task level, there are the following methods.

1) using a plurality of units concurrently within the same co-processor.
2) Using a plurality of co-processes concurrently.

In the case of using a plurality of units concurrently within the same coprocessor, it is not possible for the plurality of units to carry out simultaneous inputs or simultaneous output to/from the same memory (it will result in an execution time error). This is because internal memory of the FPGA does not have an arbitration function. However, if an arbitration function is implemented in the memory, concurrent access would become possible. For example, while summation calculation is being performed with INTRAM1, which is a parallel memory, as an input, it is not possible to use INTRAM1 as an input for scale conversion, but it is possible to make INTRAM2, which is another parallel memory, the input.

Also, in the case where there are two processing units for summation calculation, if INTRAM1 is being made an input at one of the processing units, INTRAM1 cannot also be made an input to the other processing unit.

On the other hand, with respect to a memory which is external to the FPGA, such as a PBSRAM (described later) or frame memory, since an arbitration function is generally implemented, concurrent access is possible.

When implementing an algorithm, as methods for dividing processing for parallelization, there are

- a method of dividing a single image and respectively executing on separate units,
- a method of respectively executing on separate units when the same processing is executed a plurality of times, such as template matching etc.,
- and a method of pipelining processing at a task level, etc.

Generally, in the case where the same processing is distributed to a plurality of units, from the viewpoint of competing of resources it is preferable to assign processing to separate coprocessors. On the other hand, when there is a strong dependency between tasks, if transfer cost is taken into consideration it is preferable to assign to within the same co-processor.

Here, in the case where the parallel memories 121 ... are constituted by dual port RAM, as with this embodiment, reading and writing can be carried out independently. As a result, even in the case where an output destination of a process is the input source of the next process, in the case where it is possible to confirm that the subsequent process does not overtake the previous process, it is possible to start the next process before all processing is complete.

In this way, compared to the case where the next process cannot be executed until the previous process is complete and all results are written to memory, it is possible to constitute a pipeline at a shorter stage, making it possible to contribute towards making processing high-speed. Specifically, with this embodiment, by using dual port memory as parallel memory, it is possible to carry out pipeline processing with memory as a buffer in accordance with CPU instructions (namely a program) and it becomes possible to make processing high speed.

A specific example of pipelining processing will be described later (later described table 4).

(Practical Example)

Based on the above described architecture, the present inventors developed the evaluation system shown below. Results for system design and performance evaluation are shown.

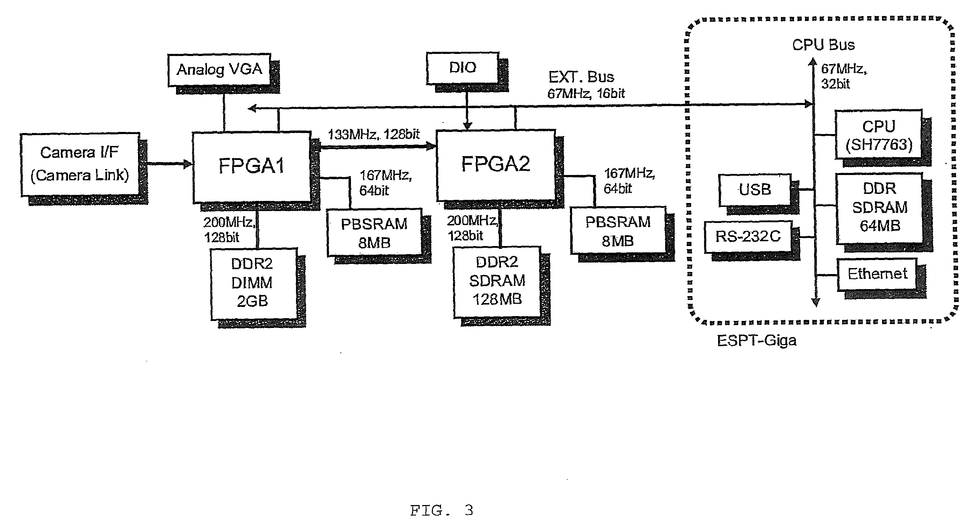

A block diagram of the developed system is shown in Fig. 3. This system is implemented on a single mainboard on which two sub boards are mounted.

FPGAs, memory, an I/O port etc. are mounted on the main board, and the sub boards are a CPU board and a camera interface board. Correspondence between elements of the previously described practical example and the hardware of this practical example are shown below.

- FPGA: coprocessor
- DDR2DIMM: Frame memory
- DIO, USB, RS-232C, Ethernet (Registered trademark): I/O interface
- DDR-SDRAM: Main memory
- EXT.BUS: Expansion bus.

Each FPGA is connected to the CPU bus by means of this expansion bus. Accordingly, functionally this expansion bus doubles as both an inter-coprocessor bus and a CPU bus.

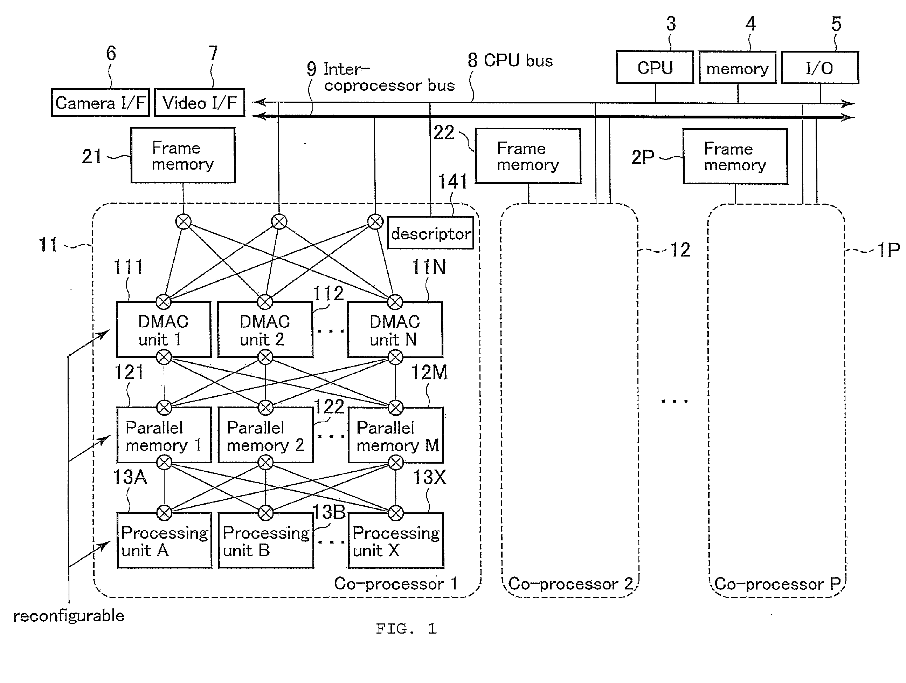

The PBSRAM in Fig. 3 is not shown in Fig. 1, but is external memory for each FPGA.

With this practical example, in order to limit development costs, the CPU board uses a commercially available CPU substrate ESPT-Giga (trade name), and is connected to FPGAs within the mainboard through the expansion bus. ESPT-Giga has a Renesas SH7763 (SH-4A, 266MHz) as a CPU, 64MB DDR-SDRAM as memory, and as input/output is provided with 10/100/1000 BASE Ethernet (Registered trademark), USB1.1, and RS232C.

Here, ESPT-Giga is capable of having a built-in Web server function, and it is possible to operate the system from a PC through a web browser, and to display processing results. In this way, remote management using a LAN becomes possible, and it becomes possible to manage a plurality of systems with a single PC.

With this practical example, two Altera made EP2S60F1020C5 devices were mounted as FPGAs. The PBSRAM in Fig. 3 are flash memories (8 MBytes) for storing configuration data of the FPGAs, and they are provided for each FPGA.

The FPGAs have respective frame memories (DRAM), and an input image from a camera is automatically stored in the frame memory of FPGA1. A camera interface is connected to FPGA1. A physical interface for an individual camera is used implemented on a camera interface substrate that is attached on the mainboard. With the implementation of this practical example, the camera interface corresponds to a Basler made A504k (monochrome)/kc (color), and a Microtron made Eosens MC 1362 (monochrome)/1363 (color). These cameras are capable of real time output of images of a maximum of 1280 x 1024 pixels at 500 fps. Also, with these cameras, it is possible to raise the frame rate by reducing the number of lines of an image. For example, with 1280 x 512 pixels it is possible to output at 1000 fps.

The previously described A504k/kc and MC1362/1363 adopt an interface with which the CameraLink standard has been specially expanded, and are connected to the board with two CameraLink cables. These cameras are compatible at the physical layer with cameras with a normal CameraLink interface, and it is therefore also possible to handle other cameras by changing the circuitry of FPGA1. Further, with this practical example it is also made possible to handle other camera interfaces, such as IEEE1394 or Gigabit Ethernet (registered trademark) by changing the camera interface substrate.

Also, an analog VGA port is connected to FPGA1, making it possible to output images that have been stored in the frame memory to a display at SXGA size (1280 x 1024).

With the image processing device of this practical example, each FPGA has a small capacity SRAM that is separate from the frame memory. With this practical example, this SRAM can be used as an input source for coordinate transform processing which will be described later.

Further with this practical example, 32-bit digital I/O (DIO) is provided separately from the external input output function using ESPT-Giga, and can be used in applications that require a high real-time capability such as robot control.

Operational speed between each module of this practical example is as follows.

- between FPGA-DRAM: 3200 MB/s (200 MHz, 128bit);

- between FPGA-SRAM: 1333 MB/s (166.6 MHz, 64bit);

- between FPGA-CPU: 133 MB/s (66.67 MHz, 16bit);

- between FPGA-FPGA: 2133 MB/s (133.33 MHz, 128bit).

Specifications for the boards of this practical example described above are collectively shown in table 1 below.
Table 1

| CPU | Renesas SH7763 (SH-4A, 266 MHz) |
|---|---|
| OS | Renesas HI7750/4 ($\mu$ITRON 4.0) |
| FPGA | Alteta Stratix II EP2S60F 1020C5$\times$ 2 |
| Memory | DDR SDRAM 64 MB (CPU) |
| | DDR2 DIMM 2 GB (Frame) |
| | DDR2 SDRAM 128 MB (Frame) |
| | PBSRAM 8 MB $\times$ 2 (FPGA local) |
| Supported Camera | Basler A504k/kc |
| | - 1280$\times$1024 pixels @ 500 fps |
| | - 1280$\times$512 pixel @ 1000 fps |
| Video Output | SXGA (1280$\times$1024) |
| L/Os | 10/100/1000BASE Ethernet |
| | USB1.1, 32 bit DIO, RS-232C |
| Dimensions 257 | mm$\times$182 mm$\times$58 mm |
| Power Supply | 12 V, 5 A |

With this practical example, a co-processor that was described for the previous embodiment is implemented in each of the FPGAs. Each co-processor has the following units.

- 2 parallel memories (64 kbytes) (PAR1, PAR4);
- 4 parallel memories (16 kbytes) (PAR2, PAR3, PARS, PAR6);
- 2 DMA control units (DMA1, DMA2);
- 9 processing units (refer to table 2 and table 3 that will be described later);
- Command descriptor.

With the coprocessors of this practical example, one pixel is processed as 16 bits. Images sent from a camera are most often 8 bit, but 16 bit is made standard since there is a need for greater precision during processing for calculation. For example, results for the case of adding or subtracting 8-bit images are 9 bit. In the case of summing a lot of images with weighting, such as filter processing etc., there is a need for a greater number of bits than this.
Processing for color images is handled as three independent grayscale images for RGB respectively. At the time of carrying out calculation at a processing unit for an image, it is possible to designate handling of 16-bit input data and handling of 16- bit output data respectively, as follows.

- Input data is

    1) interpreted as 0x0000 to 0xffff (unsigned);
    2) interpreted as -0x8000 to 0x7fff (signed).

- calculation results are

1) represented by 0x0000 to 0xffff;

2) represented by -0x8000 to 0x7fff;

3) made into an absolute value and represented by 0x0000 to 0xffff.

If a calculation result does not fit into 16 bits either a maximum value or a minimum value is made saturated.

In the event that binarization is carried out, if the relationship $T_l \leqq y \leqq T_h$ satisfied a result y is made 1, and otherwise is made 0. Here, $T_l$ and $T_h$ represent upper limit and lower limit of an appropriately set threshold value.

Coefficient parameters for image processing are set to 16 bit length or 12 bit length signed fixed point, and position of the decimal point is designated in common for each parameter.

Parallel memory can simultaneously read and write data of 128 bits (8 pixels) at a time. Also, this parallel memory is constituted by dual port RAM, and it is possible to carry out reading and writing independently.

The DMA control unit (DMAC) carries out transfer of data between each memory. With this practical example, transfer of data with the CPU is only possible with a specific DMAC (for example DMA2) in each FPGA. Also, the only device able to transfer the data to another FPGA is another specific DMAC in each FPGA (for example, it is made DMA1). Data transfer between each of the memories is carried out in 128 bit units, but when transferring data with an external memory, transfer is limited to the operating speed of the external memory.

As a data transfer range,

setting of (number of transferred bytes per line) x (number of lines); and

transfer start address for each of the source and destination, and Address increment per line,

are designated. In this way clipping and embedding of part of a large screen image is possible.

In the DMA control unit (DMAC) of this practical example, it is possible to optionally provide the following data operation circuits (namely image processing functions).

Shift circuit

This circuit outputs a result of data that has been shifted in byte units to the left, every 16 bytes. Regarding src address for data, there is a limitation that it must be a multiple of 16, but if a shift circuit is used it is possible to make data of an arbitrary address the src.

Thinning circuit

This circuit receives data input every 16 bytes and output data that has been thinned by either $8 \rightarrow 1$ (1/8th of the output data amount), $4 \rightarrow 1$ (1/4 of the output data amount), or $2 \rightarrow 1$ (1/2 of the output data amount). It is possible to carry out image compression using this function and designation of DMA transfer address increment.

Conversion circuit

With this circuit data is input every 16 bytes. Conversion can then be carried out either of 8 bit (monochrome), 16-bit (double the output data amount), 8 bit (Bayer), 16 bit (either of an R component, G component or B component), or 16-bit→ 8-bit (1/2 the output data amount). Data sent from a camera has a single pixel constituted by 8 bits, and in order to process this in a co-processor, it is necessary to convert to one pixel of 16 bits. In the case of a color camera, Bayer conversion is carried out and processing is carried out to output only one component from among RGB.

Table 2 shows calculation units (that is, processing units) implemented in each coprocessor.

Table 2

| name | function | pixels per clock, | number of units |
|---|---|---|---|
| SCALE | $O(x,y) = a_1 I(x,y) + a_2$ | 8 | 2 |
| ARITH | $O(x,y) = a_1 I_1(x,y) I_2(x,y) + a_2 I_1(x,y) + a_3 I_2(x,y) + a_4$ | 8 | 2 |
| CONV | $O(x.y) = F*I(x,y)$ | 4 | 1 |

$$F = \begin{pmatrix} a_1 & a_2 & a_3 \\ a_4 & a_5 & a_6 \\ a_7 & a_8 & a_9 \end{pmatrix}$$

(continued)

| name | function | pixels per clock, | number of units |
|------|----------|-------------------|-----------------|
| SUM | $$S = \sum_x \sum_y I(x,y)$$ | 8 | 2 |
| AFFINE | $O(x,y) = I(a_1x+a_2y+a_3, a_4x+a_5y+a_6)$ | 1 | 2 |

The meanings of symbols in this table are as follows:

- SCALE: Processing to linearly scale a pixel value;
- ARITH: Processing to carry out addition/subtraction and/or multiplication between 2 images;
- 3X3CONV: conversion filter of operator kernel size 3 X 3;
- SUM: Processing to calculate a sum of pixel values in a designated range;
- AFFINE: Processing to convert an image with planar affine transformation.

Here, AFFINE can receive input from the SRAM. SCALE, ARITH and SUM can perform processing simultaneously for 8 pixels in 1 clock, while 3X3CONV can carry out processing simultaneously for 4 pixels in 1 clock. AFFINE carries out processing for only 1 pixel in 1 clock

With this practical example, as processing units for image processing, basic functions are equipped that are considered to be the minimum requirement for executing generally commonly used image processing algorithms. Besides these, "nonlinear scale transform using a lookup table (LUT)", "nonlinear coordinate transform using a lookup table (LUT)", and "logical operations" etc. may be included as functions that are useful to implement in the process units.

The descriptors of this practical example can be respectively stored with instructions up to 256 Words (1 Word = 2 bytes). One instruction is made up of 1 to 3 Words depending on the number of parameters. Here, a single instruction corresponds to a single previously described proc_X() function, and it is possible to instruct processing for image data of a designated range using a single DMA control unit or image processing unit. An instruction to do nothing at all is also provided, and this corresponds to the sync() function.

(Specifications such as Operating Frequency, Circuit Size etc.)

The FPGAs used in this practical example operate at 200 MHz, and used resources are 88% for FPGA1 and 81% for FPGA2.

Table 3 shows processing that uses the basic functions of the system of this practical example, and computing time for processing that combines basic functions. For the purposes of comparison, computing time for the case where the same processing is implemented on a PC using OpenCV is also shown. The PC used had an Intel E6300 (1.86 GHz x 2) CPU, 3 GB of RAM, implementation using Visual Studio 2005 and OpenCV V1.0, and was measured on Windows (registered trademark) XP. EvalSys in the table shows processing time for the case of using the developed evaluation system, and OpenCV shows processing time for the case of using a PC and OpenCV.

Table 3

| algorithm | time (ns/pixel) | | $(T_B/T_A)$ |
|-----------|-----------------|---|-------------|
| | EvalSys $(T_A)$ | ratio OpenCV $(T_B)$ | |
| Basic Image Processing | | | |
| Copy† | 1.10 | | 0.51 0.46 |
| Bayer Conversion† | 2.68 | 5.15 | 1.92 |
| Shrink† | 2.16 | 1.87 | 0.87 |
| Shift | 0.76 | 0.33 | 0,43 |
| Scaling | 0.64 | 6.14 | 9,59 |
| Airthmetic Operation | 0.76 | 13.6 | 17.9 |
| 3×3 Convolution | 1.41 | 18.7 | 13.2 |
| Summation | 0.90 | 0.58 | 0.64 |

(continued)

| algorithm | time (ns/pixel) | | $(T_B/T_A)$ |
|---|---|---|---|
| | EvalSys $(T_A)$ | ratio OpenCV $(T_B)$ | |
| Affine Transformation | 5.16 | 13.6 | 2.64 |
| Complex Image Processing Centroid Detection | 2.34 | 10.2 | 4.36 |
| † From frame memory | | | |

In this practical example, input source and output destination are set to parallel memory within the FPGA, and image size is set to 256 x 32.

On the other hand, for measurement with the PC the same processing was repeatedly carried out 100,000 times, and average execution time was used. Implementation was carried out using the OpenCV library, and an image was set to signed 16-bit. However, with respect to a Bayer transform or an affine transform, OpenCV functions do not support signed 16-bit, and so were implemented as unsigned 8-bit. Coefficients used float or double in accordance with the function specification. The 3 functions of Copy, Bayer Conversion and Shrink are assumed to be carried out initially for an image that has been acquired from a camera, and so input source is set to frame memory, and measurement on a PC excludes the influence of caching immediately before processing. Also, Bayer Conversion and Shrink have different image sizes between input and output, but computation was performed on the basis of output image size.

Centroid computation first extracts a region, in which a subject is predicted to exist from results of a previous frame, from the input image, and binarizes with a fixed or adaptively defined threshold value. Next, computation of a centroid is carried out using the following equations.

$$m_{00} = \sum_{x,y} I(x,y) \qquad (1)$$

$$m_{10} = \sum_{x,y} xI(x,y), \; m_{01} = \sum_{x,y} yI(x,y) \qquad (2)$$

$$x_c = m_{10}/m_{00}, \; y_c = m_{01}/m_{00} \qquad (3)$$

Weights $I_x$ and Iy at an (x,y) coordinate value are respectively input to parallel memory in advance, the binarized input image is weighted using ARITH, and moments $m_{10}$ and $m_{01}$ are computed by summation calculation using SUM. A moment $m_{00}$ is obtained my summation calculation without weighting.

These processes are pipelined at the task level in the form shown in table 4, and executed in parallel. Since the parallel memory is of dual port type, in the case where an output destination of a process becomes the input source of the next process, it is possible to start the next processing before completion of all processing. All of the previously described processing of this practical example was executed only by the coprocessors 1.

Table 4

| | | processing 1 | processing 2 | procesing 3 | processing 4 |
|---|---|---|---|---|---|
| step 1 | | Binarization | Copy | Weighting (x) | Sum ($m_{10}$) |
| | UNIT | SCALE1 | SCALE2 | ARITH1 SUM1 | |
| | IN1 | PAR1 | PAR2 | PAR3 | PAR5 |
| | IN2 | | | PAR4 ($I_x$) | |
| | OUT | PAR2 | PAR3 | RAR5 | |

(continued)

| step 2 | Weighting ($y$) | Sum ($m_{01}$) | Sum ($m_{00}$) | |
|---|---|---|---|---|
| UNIT | ARITH1 | SUM2 | SUM1 | |
| IN1 | PAR2 | PAR5 | PAR3 | |
| IN2 | PAR4 ($l_y$) | | | |
| OUT | PAR5 | | | |

It will be understood from these results, that according to the present invention performance that is considerably improved over a PC is uniformly obtained. However, the purpose of comparing to a PC this time is to give a benchmark when comparing to other general methods, and the reason that a PC-based system is not used is in order to ensure stability and reliability. Actually, with a system that uses a PC, delay and frame dropping are observed frequently, which constitutes a hindrance to high-speed vision applications.

In the case where a PC is used also, it is possible to increase speed using multimedia commands or utilizing a GPU, and in this case it is possible to realize higher computation performance than the developed system. For example, with GPUCV (non-patent publication 30) which is one framework that uses a GPU, processing performance of 1.7 - 18 times that of a PC is reported in some image processing. However, these assume the PC platform, and can be expected to face the above-described problems.

The developed board operates with a 12V, 5A power supply, and effective power consumption is about 42W. Because the power consumption of an FPGA is comparatively high, power consumption becomes high compared to the case of using a DSP or the like, but with this practical example there is the advantage that by using a built-in system it is possible to ensure stability and reliability

With this practical example, as an architecture for a high-speed vision system, there is the advantage that by combining embedded microprocessors and FPGAs it is possible to combine both hardware reconfigurability and ease of algorithm implementation.

With the exponential advancement of semiconductor integration, processing architecture that makes practical use of parallel processing will become much more important in the future. At that time it will be difficult to make optimum use of the degree of parallelism with a generic architecture. By combining reconfigurable dedicated circuits using FPGAs and the simple programming environment of a CPU, it is possible to exhibit high image processing performance while having a certain degree of general versatility.

The reconfigurable programmable logic devices are integrated circuits normally referred to as FPGAs. By using an FPGA it is possible to rewrite functions of the image processing sections according to the user's needs. For example, it is possible to add image processing sections corresponding to deficient functions, or to add image processing sections corresponding to required functions.

With this practical example, by using dual port memory as parallel memory, it is possible to carry out reading from and writing to memory independently. It is therefore possible to make processing even higher speed.

Also, by using the descriptor, the CPU can designate a plurality of processes for the coprocessor at one time. As a result, there is the advantage that it is possible to reduce the number of times interrupts are issued to the CPU at the time of operation completion by the coprocessors.

The image processing sections correspond to specific functions used in image processing. In the case of carrying out image processing, processing can be made high speed by carrying out execution of functions required for processing in dedicated image processing sections. Further, in a program, it is possible to execute processing by designating specific functions or image processing sections.

Thus, while the invention has been described with reference to specific embodiments, the description is illustrative of the invention is not to be construed as limiting the invention.

**Claims**

1.     An image processing device, comprising a coprocessor, frame memory and a CPU,
the frame memory being configured to store image data that is to be processed,
the coprocessor comprising a plurality of image processing sections and a plurality of parallel memories,
the parallel memory being configured to receive all or part of the image data that has been stored in the frame memory and transmitting to any of the image processing sections,
the plurality of image processing sections each having a function corresponding to a function for image processing, and
the plurality of image processing sections being configured to, in accordance with instruction from the CPU, receive all or part of the image data from the parallel memories or the frame memory, and perform processing on all or part of the image data in accordance with a function for the image processing.

2. The image processing device of claim 1, wherein the coprocessors are configured using reconfigurable programmable logic devices.

3. The image processing device of claim 1 or claim 2, wherein the plurality of parallel memories are dual port memories.

4. The image processing device of any of claims 1 to 3, wherein the image processing sections comprise direct memory access controllers and processing units, the direct memory access controllers being configured to control operation of the parallel memory, and the processing units being configured to carry out processing in accordance with a function for the image processing.

5. The image processing device of any of claims 1 to 4, wherein a plurality of the coprocessors are provided.

6. The image processing device of claim 5, wherein the plurality of coprocessors are connected to a shared coprocessor bus.

7. The image processing device of any of claims 1 to 6, wherein the coprocessor is further provided with a descriptor, the CPU being configured to write commands for a coprocessor to the descriptor, and the coprocessor being configured to read commands that have been written to the descriptor, and execute processing using the plurality of image processing sections.

8. The image processing device of any of claims 1 to 7, wherein the plurality of image processing sections are configured to operate independently and in parallel in accordance with commands from the CPU.

9. An image processing method provided with the following steps:

(1) a step of a frame memory storing image data that is to be processed;
(2) a step of a parallel memory receiving all or part of the image data that has been stored in the frame memory:
(3) a step of the plurality of image processing sections receiving all or part of the image data from the parallel memories or the frame memory, in accordance with instruction from a CPU; and
(4) a step of, in accordance with instruction from the CPU, respectively performing processing on all or part of the image data in accordance with a function for image processing.

10. The image processing method of claim 9, wherein dual port memory is used as the parallel memory, and further, the plurality of image processing sections perform pipeline processing with the parallel memory as a buffer, in accordance with instruction from the CPU.

11. The image processing method of claims 9 or 10, wherein the plurality of image processing sections are configured to operate independently and in parallel in accordance with commands from the CPU, and the plurality of image processing sections also carry out parallel processing at a task level in accordance with instruction from the CPU.

FIG. 1

EP 2 472 468 A1

```
┌─────────────────────────────────────┐
│          acquire  image             │ ～ S-1
└─────────────────────────────────────┘
                  │
                  ▼
┌─────────────────────────────────────┐
│    frame memory stores  image       │ ～ S-2
└─────────────────────────────────────┘
                  │
                  ▼
┌─────────────────────────────────────┐
│        coprocessor reads            │ ～ S-3
│     commands  in descriptor         │
└─────────────────────────────────────┘
                  │
                  ▼
┌─────────────────────────────────────┐
│     image processing sections       │ ～ S-4
│          receive image              │
└─────────────────────────────────────┘
                  │
                  ▼
┌─────────────────────────────────────┐
│     image processing sections       │ ～ S-5
│          process image              │
└─────────────────────────────────────┘
```

FIG. 2

FIG. 3

**INTERNATIONAL SEARCH REPORT**

| International application No. |
| --- |
| PCT/JP2010/063740 |

A.   CLASSIFICATION OF SUBJECT MATTER
*G06T1/20*(2006.01)i

According to International Patent Classification (IPC) or to both national classification and IPC

B.   FIELDS SEARCHED

Minimum documentation searched (classification system followed by classification symbols)
G06T1/20, G06F9/38, G06F15/16, G06F15/17

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X<br>Y | JP 11-085963 A  (Canon Information Systems Research Australia Pty. Ltd.),<br>30 March 1999 (30.03.1999),<br>paragraphs [0022] to [0059], [0089], [0099] to [0103], [0277] to [0279]; fig. 1 to 7, 14 to 17<br>& US 6061749 A          & EP 875855 A2<br>& DE 69835392 T          & AU 6366798 A | 1,4-9,11<br>2,3,10 |
| Y | JP 5-073516 A  (Sony Corp.),<br>26 March 1993 (26.03.1993),<br>paragraphs [0011] to [0052]; fig. 1 to 4<br>(Family: none) | 2,3,10 |
| Y | JP 6-131155 A  (Analogic Corp.),<br>13 May 1994 (13.05.1994),<br>paragraphs [0009] to [0024]; fig. 1 to 10<br>& US 5301344 A          & EP 497029 A2 | 2,3,10 |

☐  Further documents are listed in the continuation of Box C.          ☐  See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 27 August, 2010 (27.08.10) | 07 September, 2010 (07.09.10) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **A. Namiki ; Y. Nakabo ; I. Ishii ; M. Ishikawa.** 1 ms sensory-motor fusion system. *IEEE Transactions on Mechatoronics,* 2000, vol. 5 (3), 244-252
- **Y. Nakamura ; K. Kishi ; H. Kawakami.** Heart beat synchronization for robotic cardiac surgery. *Proc. IEEE International Conference on Robotics and Automation,* 2001, 2014-2019
- **R. Ginhoux ; J. Gangloff ; M. de Mathelin ; L. Soler ; M. Sanchez ; J. Marescaux.** Beating heart tracking in robotic surgery using 500 Hz visual servoing, model predictive control and an adaptive observer. *Proc. IEEE International Conference on Robotic sand Automation,* 2004, 274-279
- **T. Senoo ; A. Namiki ; M. Ishikawa.** High-speed batting using a multi-jointed manipulator. *Proc. IEEE International Conference on Robotics and Automation,* 2004, 1 191-1196
- **N. Furukawa ; A. Namiki ; T. Senoo ; M. Ishikawa.** Dynamic regrasping using a high-speed multi-fingered hand and a high-speed vision system. *Proc. IEEE International Conference on Robotics and Automation,* 2006, 181-187
- **H. Oku ; N. Ogawa ; K. Hashimoto ; M. Ishikawa.** Two-dimensional tracking of a motile microorganism allowing high-resolution observation with various imaging techniques. *Review of Scientific Instruments,* 2005, vol. 76 (3), 034301
- **I. Ishii ; Y. Nie ; K. Yamamoto ; K. Orito ; H. Matsuda.** Real-time and long-time quantification of behavior of laboratory mice scratching. *Proc. IEEE International Conference on Automation Science and Engineering,* 2007, 628-633
- **K. Yamane ; T. Kuroda ; Y. Nakamura.** High-precision and high-speed motion capture combining heterogeneous cameras. *Proc. IEEE/RSJ International Conference on Intelligent Robots and Systems,* 2004, 279-286
- **Y. Watanabe ; T. Komuro ; M. Ishikawa.** A high-speed vision system for moment-based analysis of numerous objects. *Proc. IEEE International Conference on Image Processing,* 2007, V177-180
- **Y. Nakabo ; M. Ishikawa ; H. Toyoda ; S. Mizuno.** 1 ms column parallel vision system and its application of high speed target tracking. *Proc. IEEE International Conference on Robotics and Automation,* 2000, 650-655
- **U. Muehlmann ; M. Ribo ; P. Lang ; A. Pinz.** A new high speed CMOS camera for real-time tracking applications. *Proc. IEEE International Conference on Robotics and Automation,* 2004, 5195-5200
- **Y. Watanabe ; T. Komuro ; M. Ishikawa.** 955-fps real-time shape measurement of a moving/deforming object using high-speed vision for numerous-point analysis. *Proc. IEEE International Conference on Robotics and Automation,* 2007, 3192-3197
- **I. Ishii ; K. Yamamoto ; K. Doi ; T. Tsuji.** High-speed 3D image acquisition using coded structured light projection. *Proc. IEEE/RSJ International Conference on Intelligent Robots and Systems,* 2007, 925-930
- **X. Liu ; A. Gamal.** Synthesis of high dynamic range motion blur free image from multiple captures. *IEEE Transactions on Circuits and Systems I: Fundamental Theory and Applications,* 2003, vol. 50 (4), 530-539
- **T. Komuro ; Y. Watanabe ; M. Ishikawa ; T. Narabu.** High-S/N imaging of a moving object using a high-frame-rate camera. *IEEE International Conference on Image Processing,* 2008, 517-520
- **S. Lim ; J. Apostolopoulos ; A. Gamal.** Optical flow estimation using temporally over sampled video. *IEEE Transactions on ImageProcessing,* 2005, vol. 14 (8), 1074-1087
- **I. Ishii ; K. Kato ; S. Kurozumi, H ; Nagai, A ; Numata ; K. Tajima.** Development of a mega-pixel and milli-second vision system using intelligent pixel selection. *Proc. IEEE Technical Exhibition Based Conference on Robotics and Automation,* 2004, 9-10
- **K. Shimizu ; S.Hirai.** CMOS + FPGA vision system for visual feed back of mechanical systems. *Proc. IEEE International Conference on Robotics and Automation,* 2006, 2060-2065
- **W. Raab ; N. Bruels ; U. Hachmann ; J. Harnisch ; U. Ramacher ; C. Sauer ; A. Techmer.** A 100-GOPS programmable processor for vehicle vision systems. *A 100-GOPS programmable processor for vehicle vision systems,* 2003, vol. 20 (1), 8-15

- **H. Noda ; M. Nakajima ; K. Dosaka ; K. Nakata ; M. Higashida ; O. Yamamoto ; K. Mizumoto ; T. Tanizaki ; T. Gyohten ; Y. Okuno.** The design and implementation of the massively parallel processor based on the matrix architecture. *Proc. IEEE Journal of Solid-State Circuits,* 2007, vol. 42 (1), 183-192
- **A. Abbo ; R. Kleihorst ; V. Choudhary ; L. Sevat ; P. Wielage ; S. Mouy ; B. Vermeulen ; M. Heijligers.** Xetal-II: A 107 GOPS, 600 mW massively parallel processor for video scene analysis. *IEEE Journal of Solid-State Circuits,* 2008, vol. 43 (1), 192-201
- **S. Kyo ; S. Okazaki ; T. Arai.** An integrated memory array processor architecture for embedded image recognition systems. *Proc. International Symposium on Computer Architecture,* 2005, 134-145
- **J. Eklund ; C. Svensson ; A. A˚stro''m.** VLSI implementation of a focal plane image processor-a realization of the near-sensor image processing concept. *IEEE Transactions on Very Large Scale Integrat. (VLSI) Systems,* 1996, vol. 4 (3), 322-335
- **T. Komuro ; S. Kagami ; M. Ishikawa.** A dynamically reconfigurable SIMD processor for a vision chip. *IEEE Journal of Solid-State Circuits,* 2004, vol. 39 (1), 265-268
- **P. Dudek ; P. Hicks.** A general-purpose processor-per-pixel analog SIMD vision chip. *IEEE Transactions on Circuits and Systems I: Regular Papers,* 2005, vol. 52 (1), 13-20
- **W. Miao ; Q. Lin ; W. Zhang ; N. Wu.** A programmable SIMD vision chip for real-time vision applications. *IEEE Journal of Solid-State Circuits,* 2008, vol. 43, 1470-1479
- **J. Tanabe ; Y. Taniguchi ; T. Miyamori ; Y. Miyamoto ; H. Takeda ; M. Tarui ; H. Nakayama ; N. Takeda ; K. Maeda ; M. Matsui.** Visconti: multi VLIW image recognition processor based on configurable processor. *Proc. IEEE Custom Integrated Circuits Conference,* 2003, 185-188
- **B. Khailany ; T. Williams ; J. Lin ; E. Long ; M. Rygh ; D. Tovey ; W. Dally.** A programmable 512 GOPS stream processor for signal, image, and video processing. *IEEE Journal of Solid-State Circuits,* 2008, vol. 43, 202-213
- **M. Wirthlin ; B. Hutchings ; K. Gilson.** The nanoprocessor: a low resource reconfigurable processor. *Proc. IEEE Workshop on FPGAs for Custom Computing Machines,* 1994, 23-30
- **J. Farrugia ; P. Horain ; E. Guehenneux ; Y. Alusse.** GPUCV: a framework for image processing acceleration with graphics processors. *Proc. IEEE International Conference on Multimedia and Expo,* 2006, 585-588